**Europäisches Patentamt**

(19) **European Patent Office**

**Office européen des brevets**

(11) Publication number: **0 116 863**
A1

(12) # EUROPEAN PATENT APPLICATION

(21) Application number: **84100565.5**

(22) Date of filing: **19.01.84**

(51) Int. Cl.³: **G 06 F 15/16**
**G 06 F 3/04**

(30) Priority: **21.01.83 IT 6707083**

(43) Date of publication of application:
**29.08.84 Bulletin 84/35**

(84) Designated Contracting States:
**DE FR GB NL**

(71) Applicant: **CSELT Centro Studi e Laboratori**
**Telecomunicazioni S.p.A.**
**Via Guglielmo Reiss Romoli, 274**
**I-10148 Turin(IT)**

(72) Inventor: **Appiano, Silvano**
**Via Fonte Solforosa, 11**
**Montafia d'Asti Asti(IT)**

(72) Inventor: **Destefanis, Paolo**
**Piazza Adriano, 9**
**Turin(IT)**

(72) Inventor: **Poggio, Cesare**
**C. so Raffaello, 24**
**Turin(IT)**

(74) Representative: **Riederer Freiherr von Paar zu Schönau,**
**Anton et al,**
**Freyung 615 Postfach 2664**
**D-8300 Landshut(DE)**

(54) **Interface for controlling the bidirectional data transfer between an asynchronous bus and a synchronous bus.**

(57) Interface of the parallel type containing data transfer between an asynchronous bus, to which a control processor is connected, and a synchronous bus connected to a plurality of terminals each sending its own synchronism signal on said synchronous bus. The control is realized by causing in a time equal to the shortest period of the synchronism signals at least a transfer from or towards each terminal and possibly a transfer from or towards the control processor. The interface assigns a priority to the transfers from or towards the terminals with respect to the transfers from or towards the control processor, and interrupts these latter transfers at the end of the instruction in progress if it receives a pulse of one of the synchronism signals to start a transfer towards the corresponding terminal. In addition, said interface controls the transfers relevant to the terminals in time sequence with a fixed priority.

./...

FIG.1

'ATENTANWÄLTE

Ried  0116863

D-830(
Postfa
Lanusnut (001 1) 22110
Fax (CCITT 2) 2 min, manuell
Telex 58441 glala d

rhr. Riederer v. Paar, Postfach 2664, D-8300 Landshut

CSELT
Centro Studi e Laboratori
Telecomunicazioni S.p.A.
Turin, Italy

Partner in München:
**DIEHL & KRESSIN**
Dr. H. O. Diehl, Dr. H-R. Kressin
München (089) 177061
Fax (089) 177461 (autom.)
Telex 5215145 Zeus d

## Interface for Controlling the Bidirectional Data Transfer Between an Asynchronous Bus and a Synchronous Bus

### 1  Text of the description

The present invention relates to interface circuits allowing the dialogue among processing units and more particularly it concerns a parallel interface for controlling the bidirectional data transfer between an asynchronous bus and a synchronous bus connected to a plurality of terminals each sending its own synchronism signal onto said synchronous bus.

From now on by the term "synchronous bus" it will be intended a support on which data transfer occurs in determined and repeated periods under the control of a synchronism signal.

By the term "asynchronous bus" it will be intended a support on which data transfer occurs at any time instants and for non-fixed time intervals.

In the processing systems in which a processing unit, which will be hereinafter referred to as control processor, which sends and receives data on an external bus of the asynchronous type, has to be connected to a plurality of units, hereinafter referred to as terminals, which send and receive data on respective external bus as of the synchronous type, an interface circuit is to be inserted between the asynchronous bus and the synchronous ones for allowing a mutual dialogue.

Such an interface circuit presents particular implementing problems in the case in which each terminal has its own synchronism signal for the transfer of data on its own synchronous data bus and said signal has a relatively short period, of the order of 500 $\mu$s or even less, because a transfer must occur each period for each terminal.

In addition, the more particular case may take place in which the synchronism - signal frequencies, which ought to have nominally equal values, are subject to reciprocal shifts due for instance to intrinsic differences among the various types of quartz used to control their value, to thermal drifts or to Doppler effect: this last effect takes place for instance when these terminals belong to satellite - communication systems.

The shifts of the frequencies of the synchronism signals can give rise to time - superposition effects in data transfer from and towards the terminals.

These problems are solved by the present invention of a parallel interface for controlling bidirectional data transfer between an asynchronous bus and a synchronous one to which a plurality of terminals is connected, each of said terminals sending on said synchronous bus its own synchronism signal and a signal determining the direction of the data transfers, which interface in a time period equal to the shortest period of said synchronism signals determines at least a data transfer from or towards each of the terminals and a data transfer from or towards the asynchronous bus, assigns priority to the transfers from and towards the synchronous bus with respect to those on the asynchronous bus so as to interrupt, after receiving a pulse of one of said synchronism signals, a transfer in progress from or towards the asynchronous bus or to terminate a transfer in progress from or towards a terminal, to start a transfer from or towards a terminal which has emitted said pulse, and serves the transfers from or towards a plurality of terminals which have emitted at the same time a pulse of their own synchronism signal with a time sequence determined by a fixed priority law.

The foregoing and other characteristics of the present invention will become clearer from the following description of an embodiment given by way of non-limiting example with reference to the annexed drawings, in which:

- Fig. 1 shows the block diagram of the interface according to the invention;
- Fig. 2 shows possible trends in time of the synchronism signals;
- Fig. 3 shows a flow chart relevant to the portion of the interface program controlling the data transfer from and towards the terminals;
- Fig. 4 shows a possible solution to increasing the number of terminals connectable to the interface.

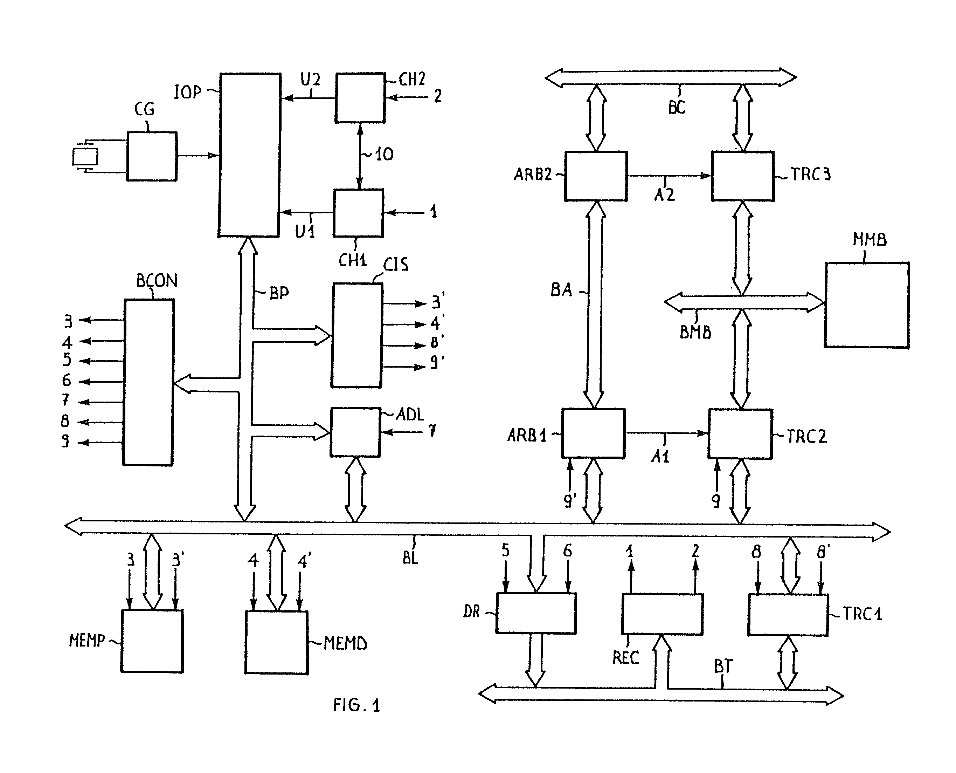

In Fig. 1 reference BC denotes a parallel bidirectional bus apt to connect the interface to the control processor not shown in the Figure.

Reference BT denotes a parallel bidirectional bus apt to connect the interface with the terminals not shown in the Figure. BT is composed of wires, common to all the terminals, which carry data and addresses, and of wires of command exchange, specific for each terminal.

In this particular embodiment the case will be considered of connection with two terminals. A possible solution will then be given designed to increase the number of connectable terminals.

As will be better explained hereinafter, by keeping a determined time subdivision between the terminals, a unique bus is sufficient to connect all the terminals.

Then bus BT is connected to all the terminals , and control signals present on BT have the task of activating the terminal actually involved in the data exchange.

It has already been mentioned that the data exchange with the terminals is of the synchronous type . To this purpose each terminal sends on a specific wire of bus BT the respective synchronism signal received by the interface through a common receiving circuit REC;on an associated wire each terminal sends also on bus BT towards REC the reading/writing command, i. e. the information relevant to data transfer direction. Then even a possible operation of data transfer from the interface to the terminal takes place only upon control of the terminal itself.

REC supplies at the output, on connections composed each of two wires, the pairs of synchronism and reading/writing signals it receives from each terminal.

In the example here described, reference 1 denotes the connection relevant to the terminal hereinafter referred to as terminal 1, and reference 2 denotes the connection relevant to terminal 2.

References CH1, CH2, denote two recognition and arbitrating or priority circuits apt to receive synchronism and reading/writing signals from the terminals through bus BT and receiver REC, on connections 1 and 2 respectively, and supply them to the output on connections U1, U2.

Synchronism signals consist of high-frequency pulses, and each data transfer is to take place in the interval elapsing between a pulse and the subsequent one, hence the arbitrating procedure the interface is to set up, in case the pulses on connections 1 and 2 arrive at the same time, must have such a high speed as to introduce no additional delays.

The arbitrating procedure is automatically carried out by CH1 and CH2 and in the particular non-limiting example described here the signal on connection 1 must always have a higher priority with respect to the signal on connection 2. On connection 10, CH1 and CH2 exchange information signals relevant to the logic state of their inputs, so that, in case the two input signals arrive at the same time, the signal on output U1 always precedes the one on output U2.

Reference IOP denotes a microprocessor unit specialized in the control of high speed data transfer operations.

This unit is capable of serving a data transfer request coming on one of the two connections U1, U2 with a maximum delay equal to the duration of a microinstruction, i. e. without introducing additional delays caused by data or addresses saving operations relevant to the main program which is interrupted at the end of the microinstruction in progress.

Yet if at the instant at which a transfer request arrives, e. g. on the connection U1, IOP has already begun to serve a transfer request arrived on the other connection (U2), the transfer in progress will be ended before beginning the subsequent one.

Circuit blocks IOP, CH1, CH2 can be implemented, by instance, by an only integrated circuit, type 8089, produced by Intel.

Reference CG denotes a usual clock generator (e. g. quartz--controlled) apt to operate as a time-base for IOP.

Reference BP denotes the bus on which microprocessor IOP sends commands, addresses and data. More particularly the addresses and the data are present on the same wires of BP at different instants.

Reference BCON denotes a usual bus controller circuit apt to separate from bus BP reading or writing commands IOP emits towards the memories and other circuits.

Reference CIS denotes a usual chip select circuit apt to separate from bus BP the selection commands for memories and other circuits.

Reference ADL denotes a usual address latch circuit apt to separate from bus BP the addresses and to memorize them, when it receives the reading command from IOP through BCON over wire 7. The addresses are then sent onto bus BL, over different wires with respect to those on which IOP sends the data through bus BP.

Bus BL is then the local bus of the interface over which the data and addresses transit in bidirectional and parallel way.

Reference MEMP denotes a normal program memory of the read-only type, which receives from IOP the selection command through CIS over wire 3', the reading command through BCON over wire 3, and receives the addresses and sends the microinstructions through bus BL.

Reference MEMD denotes a normal data memory of the RAM type, which receives from IOP the selection command through CIS over wire 4', the reading or writing command trhough BCON over wire 4, the addresses on bus BL, receives or sends the data on bus BL either from/towards IOP or form/towards other circuits examined hereinafter.

Reference DR denotes a normal driver circuit apt to send to the terminals through bus BT: the addresses, coming from bus BL, relevant to the memory positions of the terminals where to write the data (if the transfer occurs from the interface to the terminal); the typical commands of terminal selection over wires 5, 6 (one per each terminal) coming from BCON.

Reference TRC1 denotes a normal transceiver circuit apt to operate as a bidirectional receiver-transmitter for the data which must be sent from bus BL to the terminals, and for the data which arrive from bus BT at the interface. The direction of the data flow is determined by the reading/writing command coming from BCON over wire 8; in addition TRC1 is activated by the command which comes from CIS over wire 8'.

References TRC2, TRC3 denote two circuits equal to TRC1, which when enabled by signals A1, A2 connect respectively buses BL and BC with bus BMB to carry data and addresses from or towards a normal buffer memory MMB of the read/write type. The transfer data direction in TRC2 is determined by signal 9 sent by BCON, while in TRC3 the direction is determined by a command sent by the control processor through bus BC.

References ARB1, ARB2 denote two equal bus-arbiter circuits which determine the access to memory MMB by the interface and by the control processor respectively. ARB1 and ARB2 supply TRC2 and TRC3 with the enabling signals A1 and A2 respectively. In the non limiting example described here, connection BA serves to exchange between ARB1 and ARB2 control signals apt to determine, for the access requests to MMB, the priority of the interface with respect to the control processor. Signals on connection BA are determined on the basis of the information, sent through bus BC to ARB2 and through bus BL to ARB1, on the "state", i.e. on the kind of operation, which in being carried out by the control processor and the interface respectively. ARB1 in addition receives over wire 9'. from block CIS the specific request of access to bus BMB by IOP.

ARB1, ARB2 can for instance be implemented by the component 8289 produced by Intel.

Blocks ARB1, ARB2, TRC2, TRC3, MMB implement a circuit known in the technique as "biport memory" i.e. a memory allowing the asynchronous bidirectional data transfer through buses BL and BC.

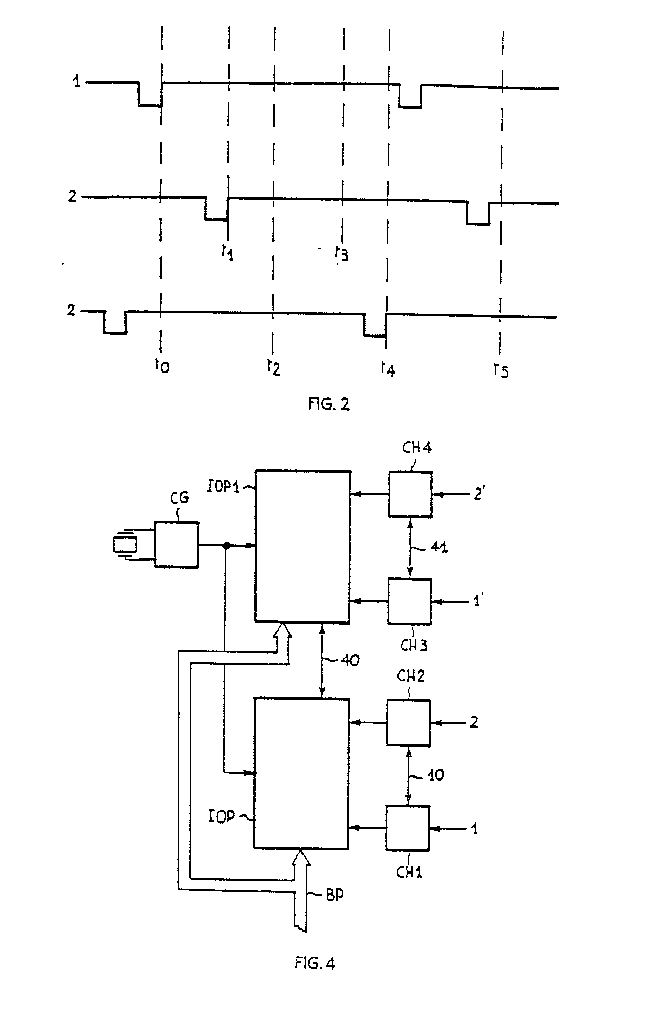

Fig. 2 shows a possible trend in time of the synchronism signal present on connection 1 (hereinafter referred to as signal 1) sent by terminal 1 to circuit CH1 (Fig. 1) and two possible trends of the synchronism signal present on connection 2 (hereinafter referred to as signal 2) sent by terminal 2 to circuit CH2, considered in two different time periods and referred to the phase of signal 1. In the present non-limiting case the synchronism signals are assumed to have nominally equal frequency values, and transitions from low to high level $(0 \rightarrow 1)$ of the signals 1 and 2 are assumed to determine the starting instants of a data transfer operation, independently of the direction of the data flow, hence both from and towards the terminals. Signals 1 and 2 usually have the same frequancy, but actually the two frequency values diverge owing to drift phenomena, due to which, if at a determined instant $t_0$ a transition of signal 1 occurs, a transition of signal 2 may take place for instance at instant $t_1$ or at instant $t_4$.

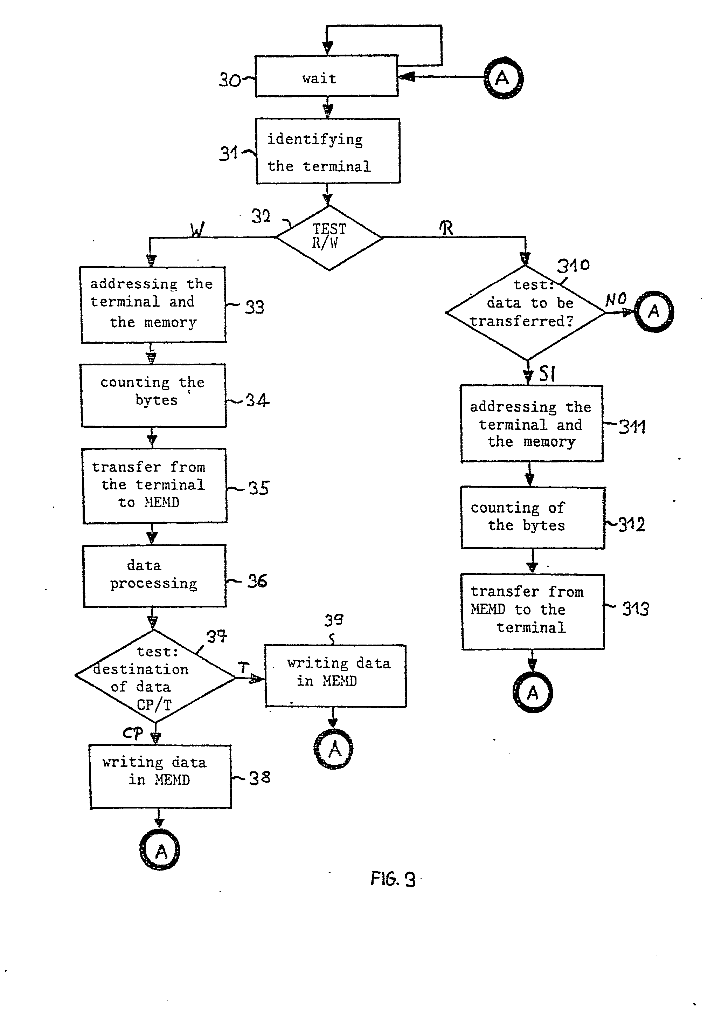

From instant $t_0$ on, the interface can control an operation of data transfer from or towards terminal 1 with modalities which will be described in connection with Fig. 3; this operation will last for instance up to instant $t_2$, afterwards the transfer operation can start relevant to the transition of signal 2 which has taken place at $t_1$. This operation will last for instance up to instant $t_3$, afterwards the interface can return to the main program.

If on the contrary the transition of signal 2 occurs at instant $t_4$, subsequent to $t_2$, in the time interval between $t_2$ and $t_4$ the interface can return to the main program, to begin then at $t_4$ to control a transfer from or towards terminal 2.

In any case the addition of the time intervals the interface dedicates to the terminals must always be sufficiently smaller than the period of synchronism signals, so that, in a time interval equal to said period, the interface can carry out a part of the main program (which may comprise a data transfer from or towards the control processor) and a transfer for each terminal.

The operation of the interface will be now described with reference also to figure 3, in which there is represented the portion of flow chart of the interface program which controls the data transfer operations from or towards the terminals.

Suppose that at a generic instant microprocessor IOP (Fig. 1) is carrying out operations relevant to the main program:said operations can comprise transfers from or towards the control processor.

Said transfers take place in two different uncorrelated and aynchronous time steps: a step foresses a transfer between memories MEMD and MMB, the other a transfer between MMB and the control processor.

All the data writing operations in MMB by the interface, as well as those by the processor, always occur starting from the same memory location so as to render the reading operations faster; these operations, as will be resumed later, provide the cyclic test of said initial locations in which a particular bit combination is written, indicating the actual data presence in the following locations.

Data transfer between memories MEMD and MMB is controlled by microprocessor IOP which sends the command through the output 9' of CIS to the arbiter ARB1 to obtain the access to bus BMB; ARB1, by the command supplied to ARB2, interrupts a possible transfer in progress between the control processor and memory MMB and supplies signal A1 to TRC2. In addition IOP, through BCON, sends to TRC2 signal 9 indicating whether the operation is a writing of data addressed to the control processor or a reading of data previously written in MMB by said processor.

An alternative to the examined cyclic reading process could be reading in MMB only upon the signalling of presence of data; the signalling can be sent by the control processor through arbitrating circuit ARB2 which in turn informs ARB1.

The transfer between memory MMB and the control processor is controlled by the processor itself which cyclically requests the access to bus BMB through a command given to arbiter ARB2; if BMB is not yet involved in a prioritary transfer controlled by IOP, the processor can start a reading or writing operation in MMB through TRC3 with modalities analogous to those relevant to the transfer between MMB and MEMD.

With reference to Fig. 3, at a generic instant the interface is in a waiting state (block 30) during which it carries out the main program while waiting for a request coming from the terminals. When a request arrives, that is signal 1 or 2, the interface leaves the waiting state, interrupts the main program at the end of the micro-instruction in progress and identifies the terminal which has emitted the request (block 31). Then it decides whether the request is a reading request R or a writing request W (block 32): by reading we intend the transfer direction from interface to terminal and by writing the opposite direction.

If it is a writing signal W, the interface starts addressing the terminal and the involved part of its memories (block 33) by means of the signals sent through circuit DR (Fig. 1).

Then the interface presets a program-controlled counter apt to count the bytes of data whose transfer is in progress (block 34).

As a rule the information on the address of the memories of the terminal and on the number of bytes to be transferred is fixed and contained in the interface program memory MEMP. But during the normal operation said data can be varied to satisfy special requirements; as a rule the higher intelligence element (in our case the control processor) controls this variation.which can be temporary or definitive.

In any case when the counter reaches its maximum value the transfer is interrupted.

Then the transfer begins (block 35) from the terminal to memory MEMD (Fig. 1) of the data through TRC1.

A step follows in which the interface can possibly execute processing on the just-received data (block 36), as for instance an adaptation of their format in function of the destination .

Then according to whether these data are to be sent to the control processor or to another terminal,denoted in Fig. 3 respectively by references CP and T (test CP/T of block 37) the interface writes said data in a suitable area of the memory MEMD (blocks 38, 39): if they were to be sent to a terminal, they would be sent to it upon its next reading request; if they were to be sent to the control processor they would be sent to it by the corresponding dialog procedure, already examined.

If the request on the contrary is a reading request R, the interface checks whether in memory MEMD there are data to be transferred (block 310);in the negative it returns to the main program; in the affirmative, it addresses the terminal and the portion of the memories involved (block 311) and presets to the counting the counter of the data bytes to be transferred (block 312).

Then the interface starts the transfer (block 313) from the memory MEMD to the terminal through TRC1 (Fig. 1). Once the transfer is over, the interface returns to the main program.

A transfer in progress, controlled by IOP, between MEMD and MMB is interrupted by a request coming from the terminals, whereas a transfer in progress between control processor and MMB, which can then be contemporaneous with a transfer from· and towards the terminals controlled by the interface is not interrupted.

A data transfer from the control processor to a terminal or viceversa may occur without the data being processed by the interface, in that way the transfer procedure may be shortened.

In fact, the control processor can control the interface so that the data coming from a terminal can be directly written into memory MMB from which they are then read by the processor itself, avoiding the intermediate transfer into MEMD. In the opposite direction, data written by the control processor in MMB can be sent directly to the terminal of destination, also in this case avoiding the intermediate transfer into MEMD.

Variations and modifications may be given to the described embodiment, without going out of the scope of the invention.

For instance Fig. 4 shows a circuit modification of the interface of Fig. 1 to bring the number of connectable terminals to 4.

A supplementary microprocessor unit IOP1 equal to IOP is provided. IOP1 too is synchronized by clock generator CG.

Both units IOP, IOP1 access bus BP according to a fixed-priority law determined by suitable internal circuits: connection 40 connects said internal circuits which mutually exchange signals apt to determine in the described example the priority of IOP with respect to IOP1 for the access to bus BP.

IOP1 is connected to two circuits CH3, CH4, similar to CH1 and CH2, which receive synchronism and reading/writing signals coming from two further terminals, 1' and 2' respectively, and exchange, on connection 41, an information signal of the kind of that on wire 10, so as to carry out an arbitrating procedure, for synchronism signals coming from terminals 1' and 2', equal to the procedure provided and already described for terminals 1 and 2.

IOP1 will control data transfer between the control processor and terminals 1' and 2' with procedures similar to those described concerning IOP.

It is evident that the number of connectable terminals cannot be increased as desired because a minimum time interval exists to be dedicated to each of them, and the sum of said time intervals must be smaller enough with respect to the period of synchronism signals.

D-8300    0116863
Postf
☎ La
Fax (0871 2) 2 mm, manuell
Telex 58441 glala d

Frhr. Riederer v. Paar, Postfach 2664, D-8300 Landshut

CSELT
Centro Studi e Laboratori
Telecomunicazioni S.p.A.
Turin, Italy

Partner in München:
**DIEHL & KRESSIN**
Dr. H. O. Diehl, Dr. H-R. Kressin
☎ München (089) 177061
Fax (089) 177461 (autom.)
Telex 5215145 Zeus d

## Interface for Controlling the Bidirectional Data Transfer Between an Asynchronous Bus and a Synchronous Bus

Patent Claims

1. A parallel interface for controlling bidirectional data transfer between an asynchronous bus and a synchronous one to which a plurality of terminals is connected, each of said terminals sending on said synchronous bus its own synchronism signal and a signal determining the direction of the data transfers, characterized in that it comprises means for determining, in a time period equal to the shortest period of said synchronism signals, at least a data transfer from or towards each of the terminals and a data transfer from or towards the asynchronous bus, for assigning priority to the transfers from and towards the synchronous bus with respect to those on the asynchronous bus, so as to interrupt, after receiving a pulse of one of said synchronism signals, a transfer in progress from or towards the asynchronous bus, or to terminate a transfer in progress from or towards a terminal which has emitted said pulse to start a transfer from or towards a terminal, and for serving the transfers from or towards a plurality of terminals, which have emitted at the same time a pulse of their own synchronism signal, with a time sequence determined by a fixed priority law.

2. Interface according to claim 1, characterized in that it comprises:
   - recognition and priority circuits (CH1, CH2, CH3, CH4), one per each terminal, for receiving said synchronism and direction-determination signals through said synchronous bus (BT) and a receiver (REC), and also for exchanging information signals (10, 41) on the logic level of the signals received at the input so as to supply at the output (U1, U2) the signals received according to said law of fixed priority;

- a first data memory (MEMD) connected to an internal bus (BL);
- a second data memory (MMB) connected to a first (TRC2) and a second (TRC3) bidirectional receiver, said receivers being in turn connected respectively to said internal bus (BL) and said asynchronous bus (BC);
- a first bus-arbiter circuit (ARB1) and a second bus-arbiter circuit (ARB2) for supplying, upon reception of a command signal, an enabling signal (A1, A2) to said first (TRC2) or said second (TRC3) bidirectional receivers respectively, for connecting them to said second data memory (MMB), and also for exchanging control signals (BA) to determine the priority of connection to said second memory of said first bidirectional receiver;
- a third bidirectional receiver (TRC1) for connecting, after the reception of a control signal (8'), said synchronous bus (BT) to said internal bus (BL);
- at least a microprocessor unit (IOP, BCON, CIS, ADL, MEMP, CG, IOP1) which receives from said recognition and priority circuits (CH1, CH2, CH3, CH4) said synchronism and direction-determination signals and is connected to said internal bus (BL), said unit serving for supplying the control signal to said first bus-arbiter circuit (ARB1) and for determining a data transfer between said first (MEMD) and second (MMB) data memories through said internal bus (BL) and said first bidirectional receiver (TRC2); also serving for interrupting a transfer between said first and second data memories, at the end of the microinstruction in progress, when it receives a pulse of a synchronism signal, and for sending a signal of terminal identification on said synchronous bus (BT), through a driving circuit (DR) connected to said internal and synchronous buses, and the control and direction-determination signals to said third bidirectional receiver (TRC1) to determine through said third bidirectional receiver a data transfer between said first memory (MEMD) and said synchronous bus (BT), said transfer being brought to end whithout interruptions.

3. Interface according to claim 2, characterized in that the transfer between said first memory (MEMD) and said synchronous bus (BT) is independent of and hence it may be contemporaneous with a data transfer between said asynchronous bus (BC) and said second memory (MMB) through said second bidirectional receiver (TRC3) enabled by said second bus-arbiter circuit (ARB2) which receives the command signal from said asynchronous bus.

FIG. 1

FIG. 2

FIG. 4

FIG. 3

European Patent
Office

EUROPEAN SEARCH REPORT

0116863
Application number

EP 84 10 0565

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-2 099 619 (GENERAL ELECTRIC) * Page 1, lines 90-100; page 2, lines 101-130; page 3, lines 1-6, 29-33, 74-91; page 4, lines 34-38, 66-83; figure * | 1 | G 06 F 15/16<br>G 06 F 3/04 |
| A | COMPUTER, vol. 12, no. 6, June 1979, pages 67-78, Long Beach, USA<br>K.A. EL-AYAT: "The intel 8089: An integrated I/O processor" * Page 68 and figure 1; figures 2,3 on page 69; page 76 and figure 8 * | 1,2 | |
| A | US-A-4 366 535 (CSELT) * Column 11, lines 43-46; column 14, lines 53-68; figures 1,6,10 * | 1,2 | **TECHNICAL FIELDS SEARCHED (Int. Cl. ³)** |
| A | COMPUTER DESIGN, vol. 19, no. 2, February 1980, pages 137-144, Concord, USA<br>J.P. BARTHMAIER: "Multiprocessing system mixes 8- and 16-bit microcomputers" * Page 140, column 1, lines 7-32; column 2, lines 1-23, figure 3; figure 4 on page 141 * | 2 | G 06 F 15/16<br>G 06 F 3/04 |

The present search report has been drawn up for all claims

| Place of search | Date of completion of the search | Examiner |
|---|---|---|
| THE HAGUE | 03-05-1984 | DHEERE R.F.B.M. |